# EUROPÄISCHE PATENTSCHRIFT

(11) **EP 3 730 330 B1**
(45) Veröffentlichungstag und Bekanntmachung des Hinweises auf die Patenterteilung: **24.08.2022**
(21) Anmeldenummer: 20174651.8
(22) Anmeldetag: 11.04.2018
(51) Int. Cl.: B60K 6/365, B60K 6/405, B60K 6/445, F16H 1/28, B60K 6/442, B60K 6/40

(54) **GETRIEBESTRUKTUR FÜR EIN SERIELL/PARALLELES HYBRIDFAHRZEUG**
TRANSMISSION STRUCTURE FOR A SERIAL/PARALLEL HYBRID VEHICLE
STRUCTURE D'ENGRENAGE POUR UN VÉHICULE HYBRIDE SÉRIE/PARALLÈLE

(30) Priorität: 18.04.2017 DE 102017206510
(43) Veröffentlichungstag der Anmeldung: 28.10.2020
(62) Teilanmeldung aus: 18719083.0
(73) Patentinhaber: VOLKSWAGEN AG, 38440 Wolfsburg (DE)
(72) Erfinder: Müller, Frank, 38165 Essenrode (DE)

(56) Entgegenhaltungen:
- WO-A1-2010/095610
- DE-A1-102014 107 222
- JP-A- 2011 011 706
- JP-A- 2012 017 825
- US-A- 5 934 395
- US-A1- 2013 192 417
- US-A1- 2013 288 854
- US-A1- 2016 101 681

## Beschreibung

Die Erfindung betrifft eine Getriebestruktur für ein, insbesondere seriell/paralleles, Hybridfahrzeug mit den Merkmalen des Patentanspruchs 1.

Seriell/parallele Hybridfahrzeuge weisen neben einer Verbrennungskraftmaschine eine erste, generatorische, insbesondere generatorisch betreibbare Elektromaschine und eine zweite, motorische, insbesondere motorisch betreibbare Elektromaschine auf. Dabei wird in einem ersten Fahrbereich, welcher sich vom Fahrzeugstillstand bis zu einer bestimmten Fahrzeuggeschwindigkeit erstreckt, das System seriell betrieben und zwar indem Leistung von der Verbrennungskraftmaschine in der ersten, generatorischen Elektromaschine in elektrische Energie umgewandelt und auf die zweite, motorische Elektromaschine übertragen und von dieser dann der Fahrzeugantrieb betrieben wird. Ab der bestimmten Fahrzeuggeschwindigkeit wird das System parallel betrieben, indem ein Schaltelement geschlossen wird, durch welches die Verbrennungskraftmaschine direkt mit dem Fahrzeugantrieb verbunden wird.

Aus der EP 2 857 243 B1, von der die Erfindung ausgeht, ist eine Getriebestruktur für Hybridfahrzeuge mit einer Verbrennungskraftmaschine sowie mit einer ersten und zweiten Elektromaschine bekannt, bei denen durch eine durch die Verbrennungskraftmaschine antreibbare Antriebswelle über einen ersten Zahnradsatz eine der ersten Elektromaschine zugeordnete erste Elektromaschinenwelle antreibbar ist und durch eine der zweiten Elektromaschine zugeordnete zweite Elektromaschinenwelle über einen zweiten Zahnradsatz ein Fahrantriebszahnrad eines Ausgleichsgetriebes des Fahrzeugs antreibbar ist. Der erste Zahnradsatz wird dabei durch zwei ineinander greifende Stirnzahnräder ausgebildet.

Aus der DE 10 2007 016 218 A1 ist eine Getriebestruktur für ein Hybridfahrzeug mit einer Verbrennungskraftmaschine und einer Elektromaschine bekannt, bei dem eine der Elektromaschine zugeordnete Elektromaschinenwelle durch eine durch die Verbrennungskraftmaschine antreibbare Antriebswelle und/oder eine Getriebeeingangswelle antreibbar ist. Dabei weist die Elektromaschinenwelle ein innenverzahntes Hohlrad auf, in das unter Bildung eines Zahnradsatzes ein Stirnzahnrad der Getriebeeingangswelle eingreift.

Weiterhin ist aus der WO 2010/0095610 A1 eine Getriebestruktur für ein serielles Hybridfahrzeug mit einer Verbrennungskraftmaschine und zwei Elektromaschinen bekannt.

Eine durch die Verbrennungskraftmaschine antreibbare Antriebswelle treibt über einen ersten Zahnradsatz eine der generatorisch betriebenen Elektromaschine zugeordnete Elektromaschinenwelle an. Eine der motorisch betriebenen Elektromaschine zugeordnete zweite Elektromaschinenwelle treibt über einen zweiten Zahnradsatz ein Fahrantriebszahnrad eines Ausgleichsgetriebes des Fahrzeugs an. Der zweite Radsatz weist ein Zwischenrad auf. Der erste Zahnradsatz weist ein Hohlrad mit einer Innenverzahnung und ein in die Innenverzahnung des Hohlrades eingreifendes Stirnzahnrad auf.

Die im Stand der Technik bekannten Getriebestrukturen für Hybridfahrzeuge sind jedoch noch nicht optimal ausgebildet. So wird der zur Verfügung stehende Bauraum häufig nicht optimal ausgenutzt. So sind häufig die Elektromaschinenwellen oberhalb der verbrennungsmaschinellen Antriebswelle beziehungsweise der Kurbelwelle und/oder der Fahrantriebswelle und/oder in einem vorderen Fahrzeugbereich angeordnet und/oder weisen einen großen Abstand, beispielsweise von etwa 90-100 mm, zur verbrennungsmaschinellen Antriebswelle auf. Oberhalb der verbrennungsmaschinellen Antriebswelle und/oder der Fahrantriebswelle beziehungsweise insbesondere im vorderen Fahrzeugbereich bzw. Motorraum sind jedoch in der Regel noch andere Bauteile, wie Längsträger und/oder Aggregatlager und/oder Bremskraftverstärker beziehungsweise auch Fahrzeugkühler, angeordnet, welche den für die Elektromaschinen nutzbaren Bauraum und Radius entsprechend einschränken, was sich negativ auf den Wirkungsgrad der Elektromaschinen auswirken kann.

Der Erfindung liegt daher die Aufgabe zu Grunde, die eingangs genannte Getriebestruktur, nun derart auszugestalten und weiterzubilden, dass diese möglichst kompakt ist und insbesondere die Bauraumausnutzung und/oder der Wirkungsgrad der Elektromaschinen verbessert wird, und dass die Getriebestruktur gleichzeitig auch ein Wegrollen des Fahrzeugs beim Parken verhindern kann.

Die der Erfindung zugrunde liegende Aufgabe wird durch eine Getriebestruktur für ein, insbesondere seriell/paralleles, Hybridfahrzeug mit einer Verbrennungskraftmaschine, einer ersten, insbesondere generatorischen, Elektromaschine und einer zweiten, insbesondere motorischen, Elektromaschine mit den Merkmalen des Patentanspruchs 1 gelöst.

Dabei ist insbesondere durch eine durch die Verbrennungskraftmaschine antreibbare Antriebswelle über einen ersten Zahnradsatz eine der ersten Elektromaschine zugeordnete erste Elektromaschinenwelle antreibbar. Durch eine der zweiten Elektromaschine zugeordnete zweite Elektromaschinenwelle ist dabei insbesondere über einen zweiten Zahnradsatz ein Fahrantriebszahnrad eines Ausgleichsgetriebes des Fahrzeugs antreibbar.

Der erste Zahnradsatz weist dabei insbesondere ein Hohlrad mit einer Innenverzahnung und ein in die Innenverzahnung des Hohlrades eingreifendes Stirnzahnrad auf. Die erste Zahnradstufe ist daher insbesondere durch das Hohlrad mit Innenverzahnung und das in die Innenverzahnung des Hohlrades eingreifende Stirnzahnrad ausgebildet.

So kann eine nur kleine "Desachsierung", beispielsweise von lediglich etwa 20 mm zwischen der verbrennungsmaschinellen Antriebswelle und den Elektromaschinenwellen, erzielt werden, die es ermöglicht, die Elektromaschinen nach unten und/oder vorne anzuordnen. Nämlich so, dass die Elektromaschinenwellen weiter entfernt von der Fahrantriebswelle als die verbrennungsmaschinellen Antriebswelle liegen, insbesondere dass bei einem Quereinbau der Getriebestruktur in einem Fahrzeug die Elektromaschinenwellen vor und/oder unter der verbrennungsmaschinellen Antriebswelle liegen. So kann die Getriebestruktur kompakter ausgestaltet und der zur Verfügung stehende Bauraum besser ausgenutzt werden. Insbesondere kann so eine Kollision des für die Elektromaschinen erforderlichen Bauraums mit dem anderer Bauteilen, wie Längsträger und/oder Aggregatlager und/oder Bremskraftverstärker beziehungsweise mit dem Fahrzeugkühler und/oder der Bodengrenzlinie vermieden werden. Zudem kann so der für die Elektromaschinen zur Verfügung stehende Bauraum vergrößert und dadurch deren Radius beziehungsweise Durchmesser - insbesondere auch unter Ermöglichung eines Freigangs der Fahrantriebswelle/n - vergrößert werden, was sich vorteilhaft auf den Wirkungsgrad der Elektromaschinen auswirken kann.

Zudem kann beispielsweise ein geringer Achsabstand zwischen der verbrennungskraftmaschinellen Antriebswelle und der Fahrantriebswelle, beispielsweise von etwa 191 mm, und ein ausreichender Abstand zwischen den Elektromaschinenwellen und der Fahrantriebswelle, beispielsweise von etwa 210 mm, realisiert werden.

Darüber hinaus kann durch den ersten Zahnradsatz in Form des Hohlrades mit Innenverzahnung und das in die Innenverzahnung eingreifende Stirnzahnrad eine Übersetzung bewirkt werden, insbesondere welche dahingehend eingestellt werden kann, dass die erste Elektromaschine mit einer für ihren Wirkungsgrad optimalen Drehzahl dreht, wodurch deren Wirkungsgrad ebenfalls zusätzlich verbessert werden kann.

Ferner ist lediglich ein Zahneingriff, nämlich zwischen der Innenverzahnung des Hohlrades und dem Stirnzahnrad, erforderlich. So können Reibungsverluste und Abnutzungserscheinungen minimiert und der Wirkungsgrad weiter verbessert werden.

Das Stirnzahnrad kann insbesondere exzentrisch zu dem Hohlrad angeordnet sein.

Die Getriebestruktur weist weiterhin eine Zwischenwelle auf. Dabei greift ein mit der zweiten Elektromaschinenwelle drehwirksam verbundenes Zahnrad in ein erstes Zwischenwellenzahnrad der Zwischenwelle ein. Ein zweites Zwischenwellenzahnrad der Zwischenwelle greift dabei in das Fahrantriebszahnrad des Ausgleichsgetriebes ein. Das erste und zweite Zwischenwellenzahnrad können dabei insbesondere in Form von Festrädern auf der Zwischenwelle ausgebildet sein. So kann der Kraftfluss beispielsweise über das Zahnrad der zweiten Elektromaschinenwelle, das erste und zweite Zwischenwellenzahnrad zum Fahrantriebszahnrad des Ausgleichgetriebes übertragen werden. Dabei sind maximal zwei Zahneingriffe, nämlich zum Einen zwischen dem Zahnrad der zweiten Elektromaschinenwelle und dem ersten Zwischenwellenzahnrad und zum Anderen zwischen dem zweiten Zwischenwellenzahnrad und dem Fahrantriebszahnrad, erforderlich. So können Reibungsverluste und Abnutzungserscheinungen minimiert werden. Hierbei wird ein zweiter Zahnradsatz im Wesentlichen durch das Zahnrad der zweiten Elektromaschinenwelle und durch das erste Zwischenwellenzahnrad gebildet, wobei über den zweiten Zahnradsatz, über die Zwischenwelle und über das mit dem Fahrantriebszahnrad in Eingriff stehende zweite Zwischenwellenzahnrad das Fahrantriebszahnrad antreibbar ist.

Erfindungsgemäß weist die Getriebestruktur eine Parksperre auf, mit welcher die Zwischenwelle sperrbar ist, nämlich die Zwischenwelle weist ein Parksperrenrad auf. Da die Zwischenwelle direkt drehwirksam mit dem Fahrantriebszahnrad verbunden ist, kann durch eine Sperrung dieser Welle ein Rollen des Fahrzeugs während des Parkens bei eingelegter Parksperre entsprechend verhindert werden.

Das Parksperrenrad ist auf der Zwischenwelle zwischen dem ersten Zwischenwellenzahnrad und dem zweiten Zwischenwellenzahnrad angeordnet.

In einer bevorzugten Ausgestaltung ist die Antriebswelle der Verbrennungskraftmaschine parallel, insbesondere nach oben, versetzt zu der ersten und zweiten Elektromaschinenwelle angeordnet. Insbesondere sind daher die erste und die zweite Elektromaschinenwelle parallel zur Antriebswelle der Verbrennungskraftmaschine nach unten versetzt angeordnet. So kann der Radius der ersten und/oder zweiten Elektromaschine vergrößert und damit deren Wirkungsgrad verbessert werden. In der bevorzugten Ausgestaltung ist die Antriebswelle drehwirksam mit dem Hohlrad und das Stirnzahnrad drehwirksam mit der ersten Elektromaschinenwelle verbunden. So kann die Getriebestruktur auf besonders einfache Weise umgesetzt werden.

In einer bevorzugten Ausgestaltung ist die Antriebswelle über einen dritten Zahnradsatz mit dem Fahrantriebszahnrad des Ausgleichsgetriebes koppelbar bzw. drehwirksam verbindbar, wobei der dritte Zahnradsatz eine Außenverzahnung umfasst und die Antriebswelle drehwirksam mit der Außenverzahnung verbunden ist. Die Antriebswelle kann insbesondere über den dritten Zahnradsatz und mit Hilfe eines Schaltelementes und/oder eines Losrades mit dem Fahrantriebszahnrad des Ausgleichsgetriebes koppelbar sein. So kann im parallelen Betrieb - zusätzlich zur zweiten Elektromaschine - auch die Verbrennungskraftmaschine für den Fahrzeugantrieb mit genutzt werden oder die Verbrennungskraftmaschine den Fahrzeugantrieb auch alleine realisieren.

In einer bevorzugten Ausgestaltung ist die Außenverzahnung am Hohlrad angeordnet. Somit kann eine besonders platzsparende und steife Konstruktion erreicht werden. Es ist aber auch vorstellbar, dass die Außenverzahnung als ein separates Zahnrad bzw. eine separate Verzahnung an der Antriebswelle oder einem mit der Antriebswelle drehwirksam verbundenen Bauteil ausgeführt und/oder angeordnet ist.

In einer bevorzugten Ausgestaltung weist die Zwischenwelle ein drittes Zwischenwellenzahnrad auf, wobei die Außenverzahnung der Antriebswelle bzw. des Hohlrades in das dritte Zwischenwellenzahnrad der Zwischenwelle eingreift. Hierdurch wird insbesondere der dritter Zahnradsatz gebildet. Dabei kann insbesondere das dritte Zwischenwellenzahnrad als ein Losrad ausgebildet sein und durch ein Schaltelement mit der Zwischenwelle drehwirksam koppelbar sein. So kann der Kraftfluss über den dritten Zahnradsatz, beispielsweise also über die Außenverzahnung des Hohlrades, über das dritte Zwischenwellenzahnrad auf die Zwischenwelle und von hier über das zweite Zwischenwellenzahnrad auf das Fahrantriebszahnrad übertragen werden. Dabei sind maximal zwei Zahneingriffe, nämlich zum Einen zwischen der Außenverzahnung des Hohlrades und dem dritten Zwischenwellenzahnrad und zum Anderen zwischen dem zweiten Zwischenwellenzahnrad und dem Fahrantriebszahnrad, erforderlich. So können Reibungsverluste und Abnutzungserscheinungen minimiert werden. Denkbar ist auch, dass das dritte Zwischenwellenzahnrad als Festrad und die Außenverzahnung der Antriebswelle bzw. des Hohlrades als Losrad ausgebildet und über das Schaltelement mit Antriebswelle drehwirksam verbindbar ist.

In einer anderen bevorzugten Ausgestaltung weist die Getriebestruktur eine Koppelwelle auf.

Dabei kann insbesondere eine Außenverzahnung des Hohlrades in ein erstes Koppelwellenzahnrad der Koppelwelle eingreifen. Hierdurch wird insbesondere der dritter Zahnradsatz gebildet. Ein zweites Koppelwellenzahnrad der Koppelwelle kann dabei insbesondere - beispielsweise direkt - in das Fahrantriebszahnrad des Ausgleichsgetriebes eingreifen. Eines der beiden Koppelwellenzahnräder kann insbesondere als Festrad auf der Koppelwelle ausgebildet sein. Beispielsweise kann das erste Koppelwellenzahnrad als Festrad auf der Koppelwelle und das zweite Koppelwellenzahnrad als Losrad ausgebildet sein. Durch ein Schaltelement kann dabei das als Losrad ausgebildete Koppelwellenzahnrad, insbesondere das zweite Koppelwellenzahnrad mit der Koppelwelle koppelbar sein. So kann der Kraftfluss über den dritten Zahnradsatz, beispielsweise also über die Außenverzahnung des Hohlrades, über das erste Koppelwellenzahnrad, über die Koppelwelle auf das zweite Koppelwellenzahnrad und von hier auf das Fahrantriebszahnrad übertragen werden. Dabei sind maximal zwei Zahneingriffe, nämlich zum Einen zwischen der Außenverzahnung des Hohlrades und dem ersten Koppelwellenzahnrad und zum Anderen zwischen dem zweiten Koppelwellenzahnrad und dem Fahrantriebszahnrad, erforderlich. So können Reibungsverluste und Abnutzungserscheinungen minimiert werden. Denkbar ist auch, dass das zweite Koppelwellenzahnrad als Festrad und das erste Koppelwellenzahnrad als Losrad ausgebildet und über das Schaltelement mit der Koppelwelle drehwirksam verbindbar ist.

Die Getriebestruktur weist insbesondere drei Radebenen aus. Die erste Radebene ist vorteilhaft der Verbrennungsmaschine nächstliegend angeordnet und umfasst vorteilhaft den dritten Radsatz, nämlich die Außenverzahnung des Hohlrades und das erste Koppelwellenzahnrad. Die dritte Radebene ist vorteilhaft der Elektromaschinen nächstliegend angeordnet und umfasst vorteilhaft den zweiten Radsatz, nämlich das Zahnrad der zweiten Elektromaschinenwelle und das erste Zwischenwellenzahnrad. Die zweite Radebene liegt zwischen der ersten und dritten Radebene und umfasst bevorzugt das zweite Koppelwellenzahnrad, das zweite Zwischenwellenzahnrad, das Fahrantriebszahnrad und im Wesentlichen den mit diesen Zahnrädern nicht kämmenden ersten Radsatz, nämlich das Hohlrades und das Stirnzahnrad der ersten Elektromaschine. In einer anderen vorteilhaften Variante ohne der Koppelwelle umfasst die erste Radebene die Außenverzahnung des Hohlrades und das dritte Zwischenwellenzahnrad und die zweite Radebene umfasst lediglich das zweite Zwischenwellenzahnrad, das Fahrantriebszahnrad und im Wesentlichen den mit diesen Zahnrädern nicht kämmenden ersten Radsatz. Somit können die Wellen sehr kurz und dadurch steif sein. In einer weiteren vorteilhaften Ausführung kann der erste Radsatz in der ersten Radebene liegen, somit das die Außen- und Innenverzahnung des Hohlrads im Wesentlichen in einer Radebene liegen.

Das Schaltelement kann beispielsweise in Form einer Schiebemuffe ausgestaltet sein.

Alternativ dazu kann das Schaltelement auch durch eine Kupplung z. B. eine Lammelenkupplung ausgebildet werden.

In der bevorzugten Ausgestaltung ist der Abstand zwischen der ersten und/oder zweiten Elektromaschinenwelle und der Koppelwelle kleiner als der Radius der zweiten und/oder ersten Elektromaschine, beispielsweise kleiner als ein Abstand von einem axialen Zentrum der zweiten und/oder ersten Elektromaschine zu einem äußersten Umfang eines, die zweite und/oder erste Elektromaschine aufnehmenden Gehäuses. So kann der Radius der ersten und/oder zweiten Elektromaschine und damit deren Wirkungsgrad verbessert werden.

Die erste Elektromaschinenwelle und die zweite Elektromaschinenwelle können insbesondere koaxial und/oder konzentrisch zueinander angeordnet sein. In der bevorzugten Ausgestaltung ist dabei die erste Elektromaschinenwelle als eine Innenwelle (Vollwelle) und die zweite Elektromaschinenwelle als eine Hohlwelle ausgebildet.

In der bevorzugten Ausgestaltung weist die erste Elektromaschinenwelle einen ersten und zweiten Elektromaschinenwellenabschnitt auf. Dabei sind der erste und zweite Elektromaschinenabschnitt über eine Kupplung, beispielsweise eine Reibkupplung, drehwirksam miteinander verbindbar und voneinander entkoppelbar. So kann die erste Elektromaschine, beispielsweise bei hohen Fahrzeuggeschwindigkeiten, von der Verbrennungskraftmaschine abgekoppelt und beispielsweise das Fahrzeug rein verbrennungsmaschinell betrieben werden. Schleppverluste durch ein Mitschleppen der ersten Elektromaschine können dabei vermieden werden. Diese Kupplung kann auch als eine nicht steuerbare Überlastkupplung ausgebildet werden.

Die eingangs genannten Nachteile sind daher vermieden und entsprechende Vorteile sind erzielt.

Es gibt nun eine Vielzahl von Möglichkeiten, die erfindungsgemäße Getriebestruktur in vorteilhafter Art und Weise auszugestalten und weiterzubilden. Hierfür darf zunächst auf die dem Patentanspruch 1 nachgeordneten Patentansprüche verwiesen werden. Im Folgenden werden einige bevorzugte Ausgestaltungen der erfindungsgemäßen Getriebestruktur anhand der Zeichnung und der dazugehörigen Beschreibung näher erläutert. In der Zeichnung zeigt:
- Fig. 1: eine schematische Darstellung einer Ausgestaltung einer erfindungsgemäßen Getriebestruktur;
- Fig. 2: eine schematische Darstellung zur Veranschaulichung der Anordnung und des Durchmessers der Wellen der in Fig. 1 gezeigten Ausgestaltung einer erfindungsgemäßen Getriebestruktur;
- Fig. 3: einen schematischen Querschnitt durch die in Fig. 1 und 2 dargestellte Ausgestaltung einer nicht erfindungsgemäßen Getriebestruktur mit einer eine zweite Elektromaschinenwelle sperrenden Parksperre;
- Fig. 4: einen schematischen Querschnitt / Ausschnitt der in Fig. 1 bis 3 dargestellten Ausgestaltung einer nicht erfindungsgemäßem Getriebestruktur in der Schnittebene B-B, insbesondere die Zwischenwelle;
- Fig. 5: einen schematischen Querschnitt / Ausschnitt der in Fig. 1 bis 4 dargestellten Ausgestaltung einer nicht erfindungsgemäßem Getriebestruktur in der Schnittebene A-A, insbesondere die Zwischenwelle und die Koppelwelle;
- Fig. 6: einen schematischen Querschnitt durch eine weitere Ausgestaltung einer erfindungsgemäßem Getriebestruktur mit einer im Bereich der Zwischenwelle angeordneten Parksperre;
- Fig. 7: eine schematische Darstellung einer weiteren Ausgestaltung einer nicht erfindungsgemäßen Getriebestruktur mit einer ersten Elektromaschinenwelle mit einem, über eine Reibkupplung drehwirksam verbindbaren und entkoppelbaren ersten und zweiten Elektromaschinenwellenabschnitt und mit einer im Bereich der zweiten Elektromaschinenwelle angeordneten Parksperre; und
- Fig. 8: einen schematischen Querschnitt durch die in Fig. 7 dargestellte Ausgestaltung einer erfindungsgemäßem, hier konstruktiv dargestellten Getriebestruktur,
- Fig. 9: eine schematische Darstellung einer anderen Ausgestaltung einer erfindungsgemäßen Getriebestruktur;
- Fig.: 10 eine schematische Darstellung zur Veranschaulichung der Anordnung und des Durchmessers der Wellen der in Fig. 9 gezeigten Ausgestaltung einer erfindungsgemäßen Getriebestruktur.

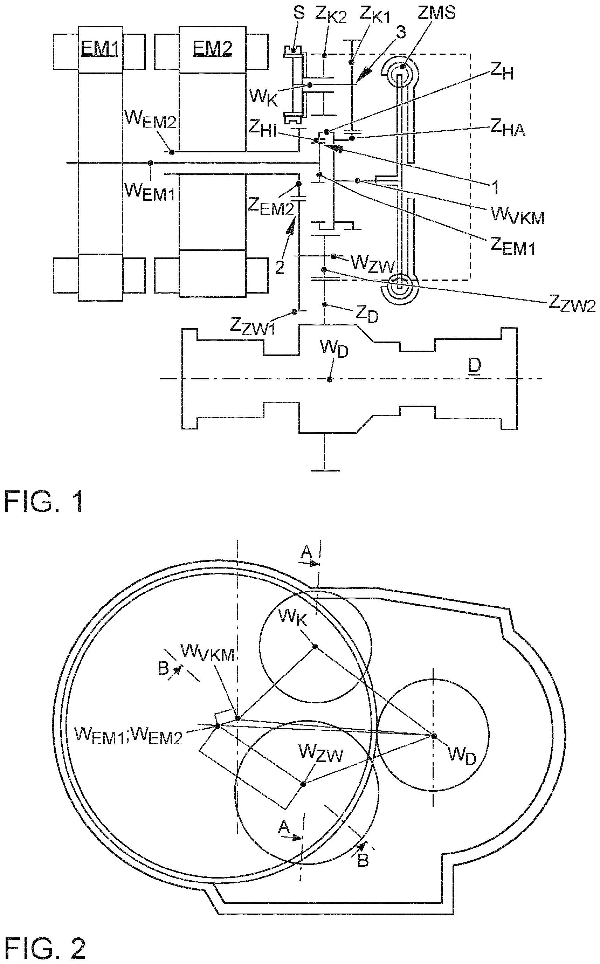

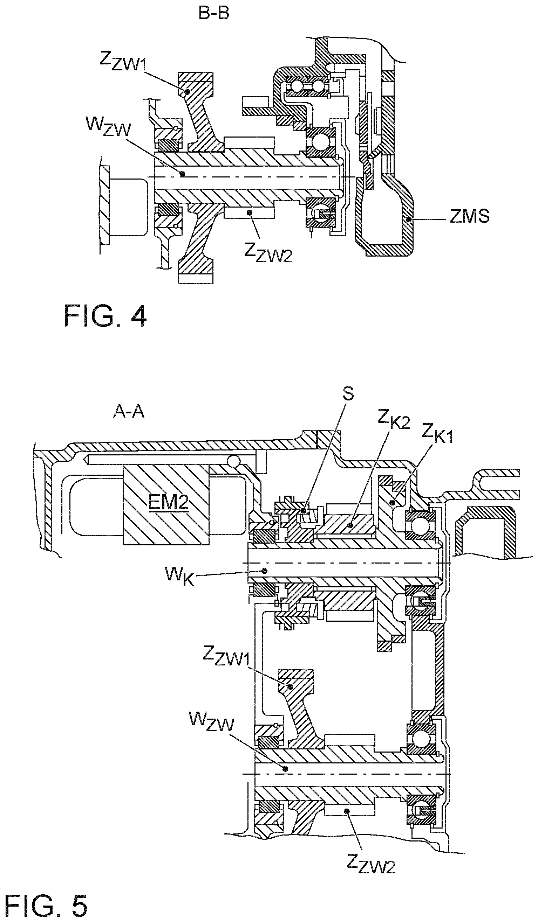

Fig. 1 bis 5, 6 sowie 7 und 8 zeigen schematisch - teils leicht - unterschiedliche Ausgestaltungen einer Getriebestruktur für ein, seriell/paralleles, Hybridfahrzeug mit einer Verbrennungskraftmaschine VKM, einer ersten, generatorischen Elektromaschine EM1 und einer zweiten, motorischen Elektromaschine EM2. Dabei kann die erste, generatorische Elektromaschine EM1 insbesondere eine höhere Drehzahl, beispielsweise eine um etwa den Faktor 1,9 höhere Drehzahl, als die Verbrennungskraftmaschine VKM aufweisen.

Dabei ist durch eine durch die Verbrennungskraftmaschine VKM antreibbare Antriebswelle W_{VKM} über einen ersten Zahnradsatz 1 eine der ersten Elektromaschine EM1 zugeordnete erste Elektromaschinenwelle W_{EM1}, beispielsweise mit einer Gesamtübersetzung von etwa i=2, antreibbar. Durch eine der zweiten Elektromaschine EM2 zugeordnete zweite Elektromaschinenwelle W_{EM2} ist dabei über einen zweiten Zahnradsatz 2, über eine Zwischenwelle Wzw ein Fahrantriebszahnrad Z_{D} eines Ausgleichsgetriebes D des Fahrzeugs, beispielsweise mit einer Gesamtübersetzung von etwa i=8, antreibbar. Die erste und die zweite Elektromaschinenwelle V_{EM1},W_{EM2} sind dabei koaxial und konzentrisch zueinander angeordnet, wobei die erste Elektromaschinenwelle W_{EM1} in Form einer Innenwelle (Vollwelle) und die zweite Elektromaschinenwelle W_{EM2} in Form einer die Innenwelle umgebenden Hohlwelle ausgebildet ist.

Bei einem seriellen Betrieb kann Leistung von der Verbrennungskraftmaschine VKM über den ersten Zahnradsatz 1 auf die erste, generatorische Elektromaschine EM1 übertragen und von der ersten, generatorischen Elektromaschine EM1 in elektrische Energie umgewandelt werden. Mit dieser elektrischen Energie kann dann die zweite, motorische Elektromaschine EM2 betrieben und über den zweiten Zahnradsatz 2 bzw. über die Zwischenwelle Wzw das Fahrzeug angetrieben werden.

Über einen dritten Zahnradsatz 3 und/oder eine Koppelwelle W_{K} bzw. mit Hilfe eines Schaltelementes S ist dabei auch die Antriebswelle W_{VKM} mit dem Fahrantriebszahnrad Z_{D} des Ausgleichsgetriebes D koppelbar.

Bei einem parallelen Betrieb kann so das Fahrzeug - zusätzlich zur zweiten, motorischen Elektromaschine EM2 - über den dritten Zahnradsatz 3 und die Koppelwelle WK (bei geschlossenen Schaltelement S) von der Verbrennungskraftmaschine VKM, beispielsweise mit einer Gesamtübersetzung von etwa i=3,5-2,4, angetrieben werden.

Die Figuren zeigen, dass der erste Zahnradsatz 1 ein Hohlrad Z_{H} mit Innenverzahnung Z_{HI} und ein in die Innenverzahnung Z_{HI} des Hohlrades Z_{H} eingreifendes Stirnzahnrad Z_{EM1} aufweist. Dabei ist das Stirnzahnrad Z_{EM1} exzentrisch zu dem Hohlrad Z_{H} angeordnet. Die Antriebswelle W_{VKM} ist dabei drehwirksam mit dem Hohlrad Z_{H} und das Stirnzahnrad Z_{EM1} drehwirksam mit der ersten Elektromaschinenwelle W_{EM1} verbunden. Dabei ist die Antriebswelle W_{VKM} parallel versetzt zu der ersten und zweiten Elektromaschinenwelle W_{EM1},W_{EM2} angeordnet.

Die Figuren zeigen weiterhin, dass die Getriebestruktur eine Zwischenwelle Wz mit einem ersten und zweiten Zwischenwellenzahnrad Z_{ZW1},Z_{ZW2} in Form eines Festrades aufweist. Der zweite Zahnradsatz 2 wird dabei durch ein mit der zweiten Elektromaschinenwelle EM2 drehwirksam verbundenes Zahnrad Z_{EM2} in Form eines Festrades und ein mit diesem Festrad in Eingriff stehendes Zwischenwellenzahnrad Z_{ZW1} gebildet. Es ist ein zweites Zwischenwellenzahnrad Z_{ZW2} vorgesehen, welches in das Fahrantriebszahnrad Z_{D} des Ausgleichsgetriebes D ebenfalls in Form eines Festrades eingreift. Der entsprechende Kraftfluss kann dann über den zweiten Zahnradsatz 2, über die Zwischenwelle W_{Z} zum zweiten Zwischenwellenzahnrad Z_{ZW2} auf das Fahrantriebsrad Z_{D} übertragen werden.

Die Figuren zeigen ferner, dass die Getriebestruktur eine Koppelwelle W_{K} mit einem ersten Koppelwellenzahnrad Z_{K1} in Form eines Festrades und einem zweiten Koppelwellenzahnrad Z_{K2} in Form eines Losrades aufweist. Der dritte Zahnradsatz 3 wird dabei durch eine Außenverzahnung Z_{HA} des Hohlrades Z_{H}, welche in das erste Koppelwellenzahnrad Z_{K1} eingreift und das erste Koppelwellenzahnrad Z_{K1} gebildet. Das zweite Koppelwellenzahnrad Z_{K2}, welches, insbesondere direkt, in das Fahrantriebszahnrad Z_{D} des Ausgleichsgetriebes D eingreift ist insbesondere als Losrad ausgebildet und durch das Schaltelement S, beispielsweise in Form einer Schiebemuffe oder einer Kupplung, mit der Koppelwelle W_{K} koppelbar ist. Der entsprechende Kraftfluss kann über den dritten Zahnradsatz 3, über die Koppelwelle W_{K} und über das zweite Koppelwellenzahnrad Z_{K2} zum Fahrantriebsrad Z_{D} übertragen werden (bei geschlossener Schiebemuffe bzw. bei geschlossenem Schaltelement).

Fig. 1, 2, 3, 5, 7 und 8 zeigen zudem, dass der Abstand zwischen der ersten beziehungsweise zweiten Elektromaschinenwelle W_{EM1}, W_{EM2} und der Koppelwelle W_{K} kleiner ist als der Radius der ersten beziehungsweise zweiten Elektromaschine EM1, EM2, insbesondere kleiner als ein Abstand von einem axialen Zentrum der ersten beziehungsweise zweiten Elektromaschine EM1,EM2 zu einem äußersten Umfang eines, die erste beziehungsweise zweite Elektromaschine EM1,EM2 aufnehmenden Gehäuses, ist.

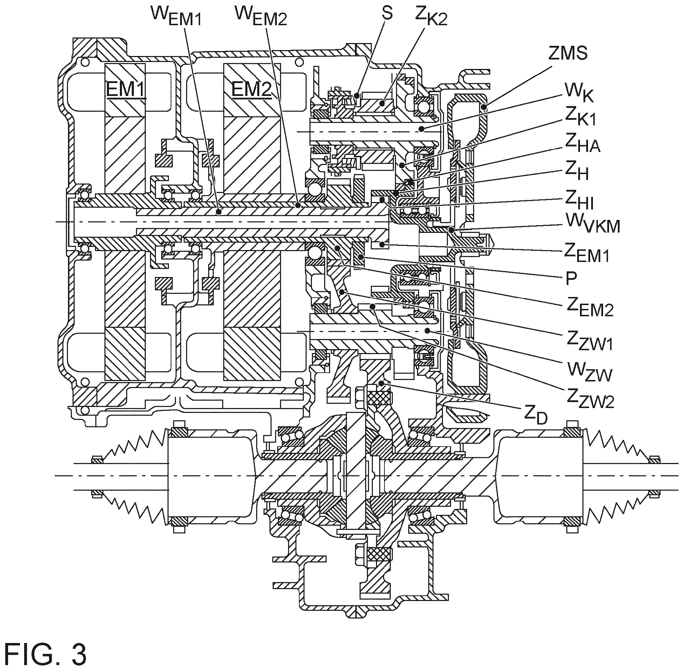

Die obigen Ausführungen betreffen im Wesentlichen die grundsätzlichen Gemeinsamkeiten der unterschiedlichen Ausführungsformen. Nun darf auf die Unterschiede im Folgenden näher eingegangen werden:
In der in Fig. 3 bis 5 gezeigten nicht erfindungsgemäßen Ausgestaltung ist die zweite Elektromaschinenwelle W_{EM2} durch eine Parksperre P sperrbar.

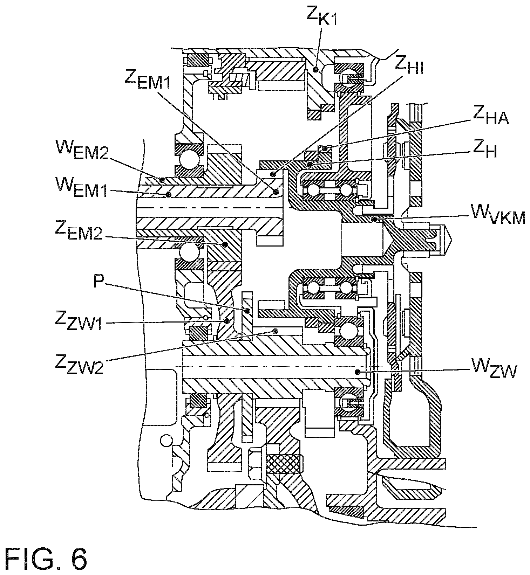

In der in Fig. 6 gezeigten erfindungsgemäßen Ausgestaltung ist die Zwischenwelle Wzw durch eine Parksperre P sperrbar.

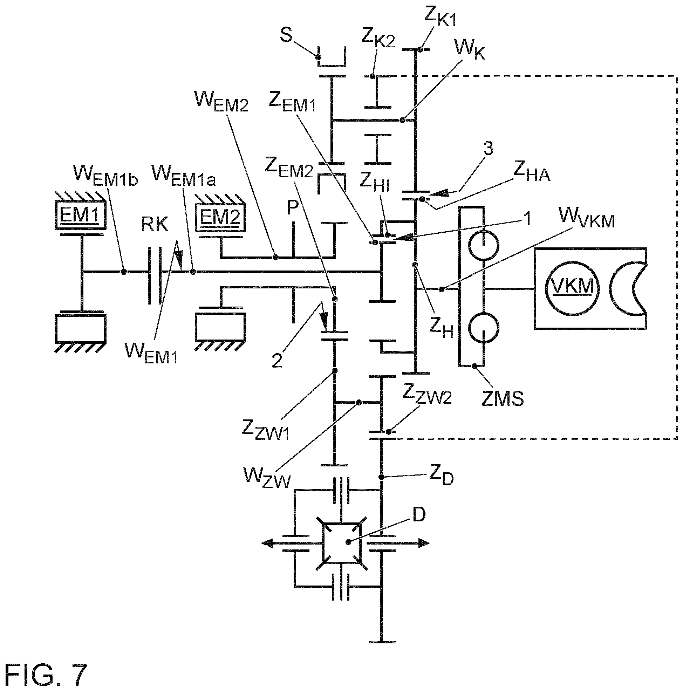

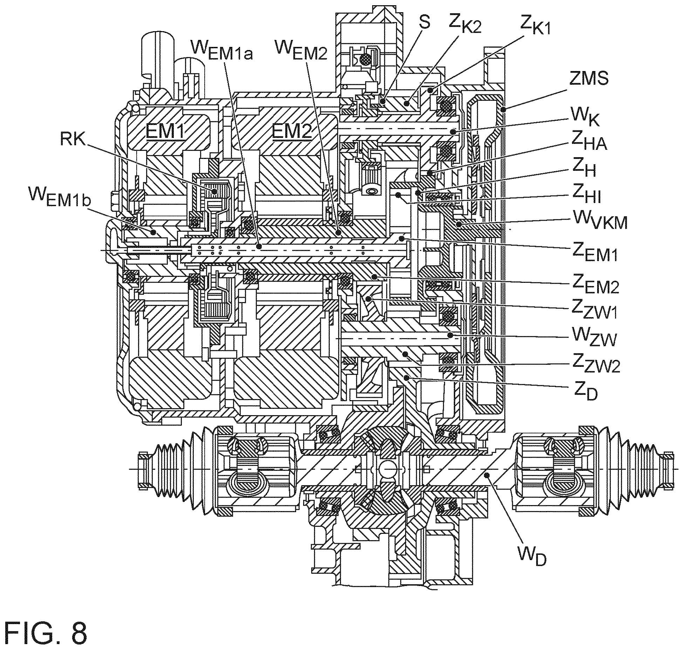

In der in Fig. 7 und 8 gezeigten nicht erfindungsgemäßen Ausgestaltung ist - analog zu der in Fig. 1 bis 5 gezeigten Ausgestaltung, die zweite Elektromaschinenwelle W_{EM2} durch eine Parksperre P sperrbar. Darüber hinaus weist in dieser Ausgestaltung die erste Elektromaschinenwelle W_{EM1} einen ersten und zweiten Elektromaschinenwellenabschnitt W_{EM1a}, W_{EM1b} auf, wobei der erste und zweite Elektromaschinenabschnitt W_{EM1a},W_{EM1b} über eine Kupplung RK, beispielsweise eine Reibkupplung, drehwirksam miteinander verbindbar und voneinander entkoppelbar sind. So kann die erste Elektromaschine EM1, beispielsweise bei hohen Fahrzeuggeschwindigkeiten, von der Verbrennungskraftmaschine VKM abgekoppelt und beispielsweise das Fahrzeug rein verbrennungsmaschinell betrieben und Schleppverluste durch ein Mitschleppen der ersten Elektromaschine EM1 vermieden werden. Denkbar ist auch, dass die Kupplung (RK) als eine Rutschkupplung ausgebildet ist, so dass im Bremsfall des Fahrzeugs die Trägheitsmasse der ersten Elektromaschine EM1 von der Antriebswelle der Verbrennungskraftmaschine abkoppelbar ist.

Weiterhin ist denkbar, dass alternativ oder zusätzlich zur Kupplung (RK) eine Kupplung wirksam zwischen der zweiten Elektromaschine und dem zweiten Zahnradsatz vorgesehen und/oder angeordnet ist.

Bei den in Fig. 1 bis 8 gezeigten Ausgestaltungen ist die Koppelwelle W_{K} oberhalb der Zwischenwelle Wzw angeordnet. Es ist jedoch ebenso möglich die Anordnung der Koppelwelle W_{K} und Zwischenwelle W_{ZW} von oben nach unten zu tauschen.

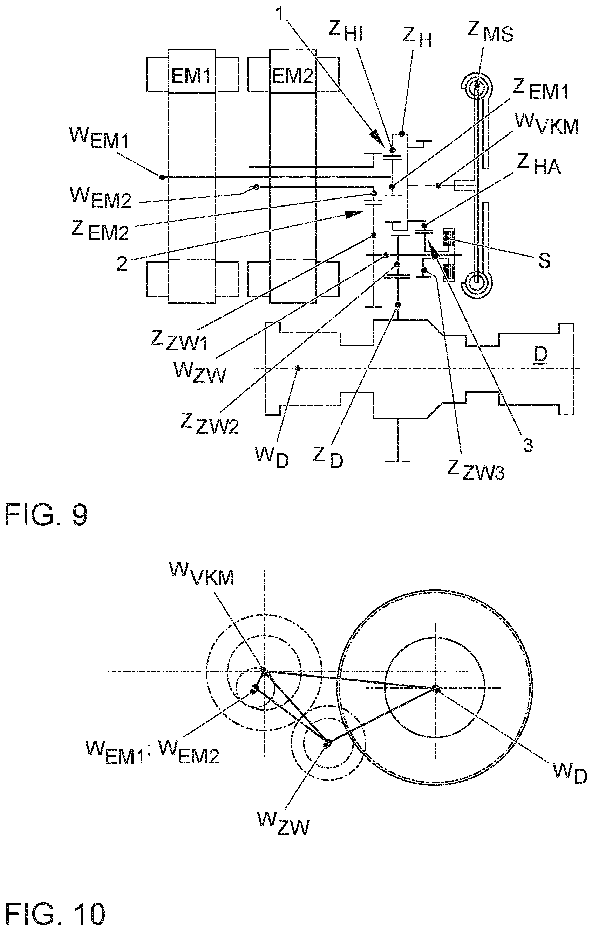

Fig. 9 und 10 zeigen schematisch eine andere Ausführungsform der erfindungsgemäßen Getriebestruktur. Es wird lediglich an die Unterschiede gegenüber der in der Fig. 1 und 2 gezeigten Struktur eingegangen. Die Figuren zeigen, dass die Zwischenwelle Wzw ein drittes Zwischenwellenzahnrad Z_{ZW3} in Form eines Losrades aufweist. Der dritte Zahnradsatz 3 wird dabei durch eine Außenverzahnung Z_{HA} des Hohlrades Z_{H}, welche in das drittes Zwischenwellenzahnrad Z_{ZW3} eingreift und das zweite Zwischenwellenzahnrad Z_{ZW2} welches, insbesondere direkt, in das Fahrantriebszahnrad Z_{D} des Ausgleichsgetriebes D eingreift gebildet. Das dritte Zwischenwellenzahnrad Z_{ZW3}, welches insbesondere als Losrad ausgebildet, ist durch das Schaltelement S, beispielsweise in Form einer Schiebemuffe oder einer Kupplung, mit der Zwischenwelle Wzw koppelbar ist. Der entsprechende Kraftfluss kann über den dritten Zahnradsatz 3, nämlich u.a. über die Zwischenwelle W_{ZW} und über das zweite Zwischenwellenzahnrad Z_{ZW2} zum Fahrantriebsrad Z_{D} übertragen werden (bei geschlossener Schiebemuffe bzw. bei geschlossenem Schaltelement).

Fig. 9 und 10 zeigen ein Beispiel der Anordnung und des Abstands zwischen der Wellen, nämlich dass die erste beziehungsweise zweite Elektromaschinenwelle W_{EM1}, W_{EM2} in einem kleinem Abstand unten und vor der Antriebswelle W_{VKM} angeordnet ist und der Abstand der am untersten liegenden Zwischenwelle W_{ZW} zu der ersten beziehungsweise zweiten Elektromaschinenwelle W_{EM1}, W_{EM2} kleiner bzw. im Wesentlichen gleich wie zu der Antriebswelle W_{VKM} ist. Die erste beziehungsweise zweite Elektromaschinenwelle W_{EM1}, W_{EM2} und die Zwischenwelle Wzw können auch über der Antriebswelle W_{VKM} bzw. der Fahrantriebswelle W_{D} angeordnet sein.

## Patentansprüche

1. Getriebestruktur für ein, insbesondere seriell/paralleles, Hybridfahrzeug mit einer Verbrennungskraftmaschine (VKM), einer ersten, insbesondere generatorischen, Elektromaschine (EM1) und einer zweiten, insbesondere motorischen, Elektromaschine (EM2), wobei durch eine durch die Verbrennungskraftmaschine (VKM) antreibbare Antriebswelle (W_{VKM}) über einen ersten Zahnradsatz (1) eine der ersten Elektromaschine (EM1) zugeordnete erste Elektromaschinenwelle (W_{EM1}) antreibbar ist, und wobei durch eine der zweiten Elektromaschine (EM2) zugeordnete zweite Elektromaschinenwelle (W_{EM2}) über einen zweiten Zahnradsatz (2) ein Fahrantriebszahnrad (Z_{D}) eines Ausgleichsgetriebes (D) des Fahrzeugs antreibbar ist, wobei der erste Zahnradsatz (1) ein Hohlrad (Z_{H}) mit einer Innenverzahnung (Z_{HI}) und ein in die Innenverzahnung (Z_{HI}) des Hohlrades (Z_{H}) eingreifendes Stirnzahnrad (Z_{EM1}) aufweist, wobei die Getriebestruktur eine Zwischenwelle (W_{ZW}) aufweist, und
wobei ein mit der zweiten Elektromaschinenwelle (W_{EM2}) drehwirksam verbundenes Zahnrad (Z_{EM2}) in ein erstes Zwischenwellenzahnrad (Z_{ZW1}) der Zwischenwelle (W_{ZM}) eingreift, **dadurch gekennzeichnet, dass**
ein zweites Zwischenwellenzahnrad (Z_{ZW2}) der Zwischenwelle (W_{ZW}) in das Fahrantriebszahnrad (Z_{D}) des Ausgleichsgetriebes (D) eingreift, dass die Getriebestruktur eine Parksperre (P) aufweist, wobei die Zwischenwelle (W_{ZW}) durch die Parksperre (P) sperrbar ist, dass die Zwischenwelle (W_{ZW}) ein Parksperrenrad aufweist und dass das Parksperrenrad zwischen dem ersten Zwischenwellenzahnrad (Z_{ZW1}) und dem zweiten Zwischenwellenzahnrad (Z_{ZW2}) angeordnet ist.

2. Getriebestruktur nach einem der vorstehenden Ansprüche, **dadurch gekennzeichnet, dass** die Antriebswelle (W_{VKM}) drehwirksam mit dem Hohlrad (Z_{H}) und das Stirnzahnrad (Z_{EM1}) drehwirksam mit der ersten Elektromaschinenwelle (W_{EM1}) verbunden ist.

3. Getriebestruktur nach einem der vorstehenden Ansprüche, **dadurch gekennzeichnet, dass** die Antriebswelle (W_{VKM}) parallel versetzt zu der ersten und zu der zweiten Elektromaschinenwelle (W_{EM1}, W_{EM2}) angeordnet ist.

4. Getriebestruktur nach einem der vorstehenden Ansprüche, **dadurch gekennzeichnet, dass** die erste Elektromaschinenwelle (W_{EM1}) und die zweite Elektromaschinenwelle (W_{EM2}) koaxial und konzentrisch zueinander angeordnet sind, insbesondere wobei die erste Elektromaschinenwelle (W_{EM1}) als eine Innenwelle und die zweite Elektromaschinenwelle (W_{EM2}) als eine Hohlwelle ausgeführt ist.

## Claims

1. Transmission structure for an, in particular, serial/parallel hybrid vehicle having an internal combustion engine (VKM), a first, in particular generator-type, electric machine (EM1), and a second, in particular motor-type, electric machine (EM2), wherein a first electric machine shaft (W_{EM1}) which is assigned to the first electric machine (EM1) can be driven via a first gearwheel set (1) by a driveshaft (W_{VKM}) which can be driven by the internal combustion engine (VKM), and wherein a traction drive gearwheel (Z_{D}) of a differential gear (D) of the vehicle can be driven via a second gearwheel set (2) by a second electric machine shaft (W_{EM2}) which is assigned to the second electric machine (EM2), wherein the first gearwheel set (1) has a ring gear (Z_{H}) with an internal toothing arrangement (Z_{HI}) and a spur gear (Z_{EM1}) which engages in the internal toothing arrangement (Z_{HI}) of the ring gear (Z_{H}), wherein the transmission structure has an intermediate shaft (W_{ZW}), and wherein a gearwheel (Z_{EM2}) which is connected effectively in terms of rotation to the second electric machine shaft (W_{EM2}) engages in a first intermediate shaft gearwheel (Z_{ZW1}) of the intermediate shaft (W_{ZM}),
**characterized in that**
a second intermediate shaft gearwheel (Z_{ZW2}) of the intermediate shaft (W_{ZW}) engages in the traction drive gearwheel (Z_{D}) of the differential gear (D);
**in that** the transmission structure has a parking lock (P), wherein the intermediate shaft (W_{ZW}) can be locked by means of the parking lock (P);
**in that** the intermediate shaft (W_{ZW}) has a parking lock wheel; and
**in that** the parking lock wheel is arranged between the first intermediate shaft gearwheel (Z_{ZW1}) and the second intermediate shaft gearwheel (Z_{ZW2}).

2. Transmission structure according to the preceding claim, **characterized in that**
the driveshaft (W_{VKM}) is connected in a rotationally effective fashion to the ring gear (Z_{H}), and the spur gear (Z_{EM1}) is connected in a rotationally effective fashion to the first electric machine shaft (W_{EM1}).

3. Transmission structure according to one of the preceding claims, **characterized in that**
the drive shaft (W_{VKM}) is arranged offset in parallel with respect to the first and second electric machine shafts (W_{EM1}, W_{EM2}) .

4. Transmission structure according to one of the preceding claims, **characterized in that**
the first electric machine shaft (W_{EM1}) and the second electric machine shaft (W_{EM2}) are arranged coaxially and concentrically with respect to one another, in particular wherein the first electric machine shaft (W_{EM1}) is embodied as an internal shaft, and the second electric machine shaft (W_{EM2}) is embodied as a hollow shaft.

## Revendications

1. Structure de boîte de vitesses pour un véhicule hybride, notamment série/parallèle, comprenant un moteur à combustion interne (VKM), une première machine électrique (EM1), notamment fonctionnant en tant que générateur, et une deuxième machine électrique (EM2), notamment fonctionnant en tant que moteur, un premier arbre de machine électrique (W_{EM1}) associé à la première machine électrique (EM1) pouvant être entraîné par un arbre d'entraînement (W_{VKM}) pouvant être entraîné par le moteur à combustion interne (VKM) par le biais d'un premier jeu de roues dentées (1), et un jeu de roues dentées d'entraînement de conduite (Z_{D}) d'un différentiel (D) du véhicule pouvant être entraîné par un deuxième arbre de machine électrique (W_{EM2}) associé à la deuxième machine électrique (EM2) par le biais d'un deuxième jeu de roues dentées (2), le premier jeu de roues dentées (1) présentant une couronne dentée (Z_{H}) avec une denture intérieure (Z_{HI}) et une roue dentée frontale (Z_{EM1}) s'engageant dans la denture intérieure (Z_{HI}) de la couronne dentée (Z_{H}), la structure de boîte de vitesses présentant un arbre intermédiaire (W_{ZW}), et une roue dentée (Z_{EM2}) connectée fonctionnellement en rotation au deuxième arbre de machine électrique (W_{EM2}) s'engageant dans une première roue dentée d'arbre intermédiaire (Z_{ZW1}) de l'arbre intermédiaire (W_{ZM}),
**caractérisée en ce qu'**une deuxième roue dentée d'arbre intermédiaire (Z_{ZW2}) de l'arbre intermédiaire (W_{ZW}) s'engage dans la roue dentée d'entraînement de conduite (Z_{D}) du différentiel (D), **en ce que** la structure de boîte de vitesses présente un verrouillage de stationnement (P), l'arbre intermédiaire (W_{ZW}) pouvant être verrouillé par le verrouillage de stationnement (P), **en ce que** l'arbre intermédiaire (W_{ZW}) présente une roue de verrouillage de stationnement, et **en ce que** la roue de verrouillage de stationnement est disposée entre la première roue dentée d'arbre intermédiaire (Z_{ZW1}) et la deuxième roue dentée d'arbre intermédiaire (Z_{ZW2}).

2. Structure de boîte de vitesses selon l'une quelconque des revendications précédentes, **caractérisée en ce que** l'arbre d'entraînement (W_{VKM}) est connectée fonctionnellement en rotation à la couronne dentée (Z_{H}), et la roue dentée frontale (Z_{EM1}) est connectée fonctionnellement en rotation au premier arbre de machine électrique (W_{EM1}).

3. Structure de boîte de vitesses selon l'une quelconque des revendications précédentes, **caractérisée en ce que** l'arbre d'entraînement (W_{VKM}) est disposé en décalage parallèle par rapport au premier et au deuxième arbre de machine électrique (W_{EM1}, W_{EM2}) .

4. Structure de boîte de vitesses selon l'une quelconque des revendications précédentes, **caractérisée en ce que** le premier arbre de machine électrique (W_{EM1}) et le deuxième arbre de machine électrique (W_{EM2}) sont disposés de manière coaxiale et concentrique l'un par rapport à l'autre, en particulier le premier arbre de machine électrique (W_{EM1}) étant réalisé sous forme d'arbre intérieur et le deuxième arbre de machine électrique (W_{EM2}) étant réalisé sous forme d'arbre creux.
